# EUROPÄISCHE PATENTSCHRIFT

(11) **EP 3 715 517 B1**
(45) Veröffentlichungstag und Bekanntmachung des Hinweises auf die Patenterteilung: **05.11.2025**
(21) Anmeldenummer: 20161281.9
(22) Anmeldetag: 05.03.2020
(51) Int. Cl.: D04H 3/16, D04H 3/147, D04H 3/14, D04H 3/007, D01D 5/22, D01D 5/098, D01F 6/30, D01F 8/06, B32B 5/26

(54) **VERFAHREN ZUR HERSTELLUNG EINES VLIESLAMINATES UND VLIESLAMINAT**
NON-WOVEN LAMINATE AND METHOD FOR PRODUCING SAME
PROCÉDÉ DE FABRICATION D'UN STRATIFIÉ NON-TISSÉ ET STRATIFIÉ NON-TISSÉ

(30) Priorität: 26.03.2019 DE 102019107771
(43) Veröffentlichungstag der Anmeldung: 30.09.2020
(73) Patentinhaber: Reifenhäuser GmbH & Co. KG Maschinenfabrik, 53844 Troisdorf (DE)
(72) Erfinder: WAGNER, Tobias, 50823 Köln (DE); BOHL Patrick, 53773 Hennef (DE); FREY Detlef, 53859 Niederkassel (DE)
(74) Vertreter: Andrejewski - Honke Patent- und Rechtsanwälte Partnerschaft mbB

(56) Entgegenhaltungen:
- EP-A1- 2 022 878
- EP-A1- 2 644 763
- WO-A1-2017/198336
- WO-A1-2019/203484
- US-A1- 2007 098 768
- US-A1- 2018 038 025

## Beschreibung

Die Erfindung betrifft ein Verfahren zur Herstellung eines Vlieslaminates mit zumindest zwei Vlieslagen, wobei die beiden Vlieslagen als Spinnvlieslagen erzeugt werden und wobei zur Erzeugung jeder Spinnvlieslage Endlosfilamente mittels zumindest einer Spinnerette ersponnen werden, daraufhin abgekühlt werden und anschließend verstreckt werden und schließlich zu einer Vliesbahn auf einer Ablageeinrichtung, insbesondere einem Ablagesiebband abgelegt werden. Die Erfindung betrifft weiterhin ein Vlieslaminat aus zumindest zwei Vlieslagen. - Endlosfilamente unterscheiden sich bekanntlich aufgrund ihrer quasi endlosen Länge von Stapelfasern, die viel geringere Längen von beispielsweise 10 mm bis 60 mm aufweisen. Bei den im Rahmen der Erfindung eingesetzten Endlosfilamenten handelt es sich um Endlosfilamente aus thermoplastischem Kunststoff.

Vlieslaminate bzw. Spinnvlieslaminate der vorstehend beschriebenen Art sind aus der Praxis grundsätzlich in unterschiedlichen Ausführungsformen bekannt. Man ist oftmals bestrebt, Vliese bzw. Vlieslaminate mit elastischen Eigenschaften herzustellen. Dabei sollen die Vliese bzw. Vlieslaminate zum einen weich und dehnfähig sein und zudem elastische Rückstellkräfte aufweisen. Zur Erzeugung solcher elastischer Vliese sind bereits verschiedene Maßnahmen aus dem Stand der Technik bekannt.

Eine bekannte Maßnahme besteht darin, die Elastizität des Vlieses durch Einbettung von Lycra-Fäden in die Vliesstruktur zu erreichen. Diese Einbettung der Lycra-Fäden stellt jedoch einen zusätzlichen Prozessschritt dar und ist relativ aufwendig. Außerdem sind die Lycra-Fäden im Vliesprodukt sichtbar, was häufig nicht erwünscht ist. Damit eine Ausdehnung der entsprechenden Vliesbahn möglich ist, müssen die Lycra-Fäden in gespanntem Zustand auf die Vliesbahn aufgebracht werden und das Vlies wird dann in der Regel in einem entspannten bzw. geschrumpften Zustand in ein Laminat eingebaut. Dann resultieren in der Vliesbahn störende Falten, wenn die Lycra-Fäden in ihren Ursprungszustand zurückkehren.

Zur Erzielung der Elastizität eines Vlieses ist es weiterhin bekannt, eine Vliesbahn aus einer Mischung von Polypropylen-Fasern und Fasern aus thermoplastischem Polyurethan (TPU) zur erzeugen. Die TPU-Fasern sind dabei für die elastischen Eigenschaften des Vlieses verantwortlich. Die Polypropylen-Fasern sollen bei der Erzeugung eines Spinnvlieses verhindern, dass die TPU-Fasern nach dem Ausspinnen der Fasern am Verstreckkanal oder am Diffusor der Anlage festkleben oder mit anderen Fasern verkleben und hierdurch eine nicht zufriedenstellende Faserablage entsteht. Nachteilhaft bei dieser Maßnahme ist, dass die Polypropylen-Fasern keine elastischen Eigenschaften besitzen und die Dehnung des Vlieses behindern. Um die elastischen Eigenschaften des Vlieses zu gewährleisten, muss es gereckt werden. Zur Erzielung einer höheren Dehnung wird dabei die ursprüngliche Vliesstruktur gelockert bzw. beschädigt. Die Polypropylen-Fasern werden beim Recken aus den Bondingpunkten herausgerissen und die Bondingpunkte dadurch gelockert bzw. zerstört. Ein weiterer Nachteil besteht darin, dass thermoplastisches Polyurethan (TPU) relativ teuer ist und zudem eine Mischung aus TPU und Polypropylen nur schwierig recyclebar ist. TPU hat den zusätzlichen Nachteil, dass es beim Kalandrieren des Vlieses an heißen Oberflächen der Kalanderwalzen kleben bleibt. Diese bekannten Maßnahmen sind also nicht zufriedenstellend.

Fernerhin ist aus EP 2 644 763 A1 ein Vlieslaminat bekannt, das aus einer elastischen Kernlage besteht, die beidseitig durch dehnfähige Vlieslagen bedeckt wird. Dieses Vlieslaminat wird nach seiner Erzeugung gereckt. Dazu müssen die Decklagen eine ausreichende Dehnfähigkeit aufweisen. Bei diesen bekannten Maßnahmen ist jedoch kein zufriedenstellender Kompromiss zwischen der Dehnfähigkeit des Laminates, optimalen elastischen Rückstellkräften und der Weichheit des Laminates erzielbar.

Eine weiterhin bekannte Maßnahme besteht darin, dass auf eine Vliesbahn aus Filamenten eine gereckte elastische Kunststofffolie laminiert wird. Das Laminieren dieser elastischen Folie stellt aber einen zusätzlichen Prozessschritt dar und ist deshalb mit Aufwand verbunden. Nachteilhaft ist außerdem, dass die Eigenschaften des Vliesstoffes durch die auflaminierte Folie beeinflusst bzw. bestimmt werden. So ist aufgrund der Folie keine ausreichende Luftdurchlässigkeit des Laminates gegeben. Zudem wird bei der Herstellung das nicht dehnfähige Vlies auf die gedehnte Kunststofffolie aufgebracht, so dass später eine Dehnung der Kunststofffolie möglich ist. Daraus resultieren störende Falten.

Dementsprechend liegt der Erfindung das technische Problem zugrunde, ein Verfahren der eingangs genannten Art anzugeben, mit dem die vorstehend beschriebenen Nachteile effektiv vermieden werden können und mit dem ein Vlieslaminat erzeugt werden kann, das einerseits ausreichend dehnfähig ist und andererseits zufriedenstellende elastische Rückstellkräfte aufweist und zusätzlich eine verhältnismäßig hohe Weichheit besitzt. Der Erfindung liegt weiterhin das technische Problem zugrunde, ein entsprechendes Vlieslaminat anzugeben.

Zur Lösung des technischen Problems lehrt die Erfindung ein Verfahren zur Herstellung eines Vlieslaminates gemäß Patentanspruch 1.

Gemäß einer bevorzugten Ausführungsform der Erfindung wird die zumindest eine zweite Spinnvlieslage bzw. das zumindest eine zweite Spinnvlies aus Monokomponentenfilamenten erzeugt.

Vorzugsweise bestehen die Endlosfilamente bzw. Monokomponentenfilamente des zweiten Spinnvlieses aus dem Elastomer auf Basis von Polypropylen bzw. im Wesentlichen aus dem Elastomer auf Basis von Polypropylen. Dass diese Endlosfilamente bzw. Monokomponentenfilamente im Wesentlichen aus dem Elastomer auf Basis von Polypropylen bestehen, meint insbesondere, dass neben dem Elastomer auch noch zumindest ein Additiv in den Endlosfilamenten bzw. Monokomponentenfilamenten vorhanden sein kann. Zweckmäßigerweise bestehen die Endlosfilamente bzw. Monokomponentenfilamente zu mindestens 95 Gew.-%, bevorzugt zu mindestens 97 Gew.-% und sehr bevorzugt zu mindestens 98 Gew.-% aus dem Elastomer auf Basis von Polypropylen.

Gemäß einer alternativen Ausführungsform der Erfindung handelt es sich bei den Endlosfilamenten des zumindest einen zweiten Spinnvlieses um Bikomponentenfilamente, die bevorzugt als Bikomponentenfilamente mit Kern-Mantel-Konfiguration, insbesondere mit zentrischer Kern-Mantel-Konfiguration, ausgebildet sind.

Empfohlenermaßen wird im Rahmen des erfindungsgemäßen Verfahrens zunächst die erste Spinnvlieslage aus den gekräuselten Filamenten auf der Ablageeinrichtung bzw. auf dem Ablagesiebband abgelegt und anschließend wird die zweite Spinnvlieslage auf der ersten Spinnvlieslage abgelegt. - Eine besonders bevorzugte Ausführungsform, der im Rahmen der Erfindung ganz besondere Bedeutung zukommt, ist dadurch gekennzeichnet, dass eine dritte Spinnvlieslage bzw. ein drittes Spinnvlies aus gekräuselten Mehrkomponentenfilamenten - insbesondere aus gekräuselten Bikomponentenfilamenten - erzeugt wird. Dabei ist besonders bevorzugt, dass die zweite Spinnvlieslage zwischen der ersten Spinnvlieslage und der dritten Spinnvlieslage angeordnet wird. Im Zuge der Erzeugung des erfindungsgemäßen Vlieslaminates wird zweckmäßigerweise zunächst die erste Spinnvlieslage auf der Ablageeinrichtung bzw. auf dem Ablagesiebband abgelegt und danach wird die zweite Spinnvlieslage auf der ersten Spinnvlieslage abgelegt. Schließlich wird im Rahmen dieser bevorzugten Ausführungsform die dritte Spinnvlieslage auf der zweiten Spinnvlieslage abgelegt, sodass die zweite Spinnvlieslage die Kernlage zwischen der ersten und der dritten Spinnvlieslage darstellt.

Es liegt im Rahmen des erfindungsgemäßen Verfahrens, dass zumindest zwei, vorzugsweise zumindest drei zweite Spinnvlieslagen bzw. zweite Spinnvliese erzeugt werden. Empfohlenermaßen bilden diese zweiten Spinnvliese bzw. diese zweiten Spinnvlieslagen zwei bzw. drei Kernlagen zwischen der ersten und der dritten Spinnvlieslage, sodass ein zumindest vierlagiges bzw. fünflagiges Vlieslaminat gebildet wird.

Es liegt im Rahmen der Erfindung, dass das erfindungsgemäß erzeugte Vlieslaminat eine elastische Dehnung in mindestens einer Richtung von mindestens 60 % und bevorzugt von mindestens 70 % aufweist. Dehnung bzw. Dehnfähigkeit meint dabei insbesondere die Fähigkeit zur Dehnung des Laminates, ohne dass das Laminat zerstört wird bzw. ohne dass insbesondere die Bondingpunkte zwischen den Filamenten zerstört werden bzw. in nennenswertem Maße zerstört werden. - Das erfindungsgemäße Vlieslaminat zeichnet sich durch eine Kombination weicher dehnfähiger Vlieslagen bzw. Decklagen aus gekräuselten Filamenten mit mindestens einer elastischen Kernlage aus. Durch die Kräuselung der Filamente der äußeren Vlieslagen werden gleichsam High-Loft-Decklagen eingesetzt. Durch die Kombination der High-Loft-Vlieslagen mit der elastischen Kernlage wird dem Vlieslaminat ein optimales elastisches Verhalten in allen Richtungen verliehen und zwar bereits auch ohne eine zusätzliche Aktivierung in Form einer Reckung des Vlieslaminates. Durch die elastischen Eigenschaften des Vlieslaminates einerseits und durch die weiche Oberflächenhaptik des Laminates andererseits eignet sich das Laminat hervorragend zum Einsatz in Hygieneprodukten, beispielsweise in Windeln.

Es liegt im Rahmen der Erfindung, dass das Massenverhältnis der zweiten Spinnvlieslage bzw. der elastischen Spinnvlieslage zu zumindest einer der Spinnvlieslagen aus gekräuselten Filamenten 70:30 bis 30:70 beträgt. Nach einer sehr empfohlenen Ausführungsform der Erfindung ist der Massenanteil der zweiten Spinnvlieslage bzw. der elastischen Spinnvlieslage im Vergleich zu dem Massenanteil zumindest einer Spinnvlieslage aus gekräuselten Filamenten höher. Zweckmäßigerweise beträgt dabei das Massenverhältnis zwischen der zweiten Spinnvlieslage bzw. der elastischen Spinnvlieslage und zumindest einer Spinnvlieslage aus gekräuselten Filamenten 50:60 bis 40:50 und beispielsweise 55:45. Mit dem Einsatz mehrerer Spinneretten bzw. mehrerer Spinnbalken für die zweite Spinnvlieslage lässt sich der Massenanteil der zweiten bzw. der elastischen Spinnvlieslage vergrößern.

Es empfiehlt sich, dass die gekräuselten Filamente der ersten Spinnvlieslage und/oder die gekräuselten Filamente der dritten Spinnvlieslage als gekräuselte Filamente mit asymmetrischer Faserkonfiguration ausgebildet sind.

Eine besonders bevorzugte Ausführungsform, der im Hinblick auf die Lösung des technischen Problems besondere Bedeutung zukommt, ist dadurch gekennzeichnet, dass die gekräuselten Filamente der ersten Spinnvlieslage und/oder die gekräuselten Filamente der dritten Spinnvlieslage als gekräuselte Filamente mit Seite-an-Seite-Konfiguration und/oder mit Kern-Mantel-Konfiguration, insbesondere mit exzentrischer Kern-Mantel-Konfiguration, ausgebildet sind. Besonders bevorzugt sind die gekräuselten Filamente der ersten Spinnvlieslage und/oder die gekräuselten Filamente der dritten Spinnvlieslage als gekräuselte Bikomponentenfilamente mit Seite-an-Seite-Konfiguration und/oder mit Kern-Mantel-Konfiguration, insbesondere mit exzentrischer Kern-Mantel-Konfiguration, ausgebildet.

Eine empfohlene Ausführungsform der Erfindung zeichnet sich dadurch aus, dass die gekräuselten Filamente der ersten Spinnvlieslage und/oder die gekräuselten Filamente der dritten Spinnvlieslage zumindest eine Komponente auf Basis von Polypropylen und insbesondere auf Basis von Homopolypropylen aufweisen. Zweckmäßigerweise besteht dabei zumindest eine Komponente der gekräuselten Filamente aus Polypropylen, insbesondere aus Homopolypropylen bzw. im Wesentlichen aus Polypropylen, insbesondere im Wesentlichen aus Homopolypropylen. Im Wesentlichen meint dabei insbesondere, dass die Komponente außer Polypropylen bzw. Homopolypropylen auch zumindest ein Additiv aufweisen kann. Zweckmäßigerweise sind in der zumindest einen Komponente der gekräuselten Filamente mindestens 95 Gew.-%, vorzugsweise mindestens 96 Gew.-% Polypropylen bzw. Homopolypropylen vorhanden. Gemäß einer Ausführungsvariante ist in der zumindest einen Komponente der gekräuselten Filamente zumindest ein Fettsäureamid als Additiv bzw. als Gleitmittel enthalten, insbesondere Erucasäureamid als Additiv bzw. als Geitmittel enthalten. Es empfiehlt sich, dass die zumindest eine Komponente 1 bis 3 Gew.-% Fettsäureamid, insbesondere Erucasäureamid aufweist. Zweckmäßigerweise sind 1.000 bis 5.000 ppm Additive bzw. Gleitmittel, vorzugsweise Fettsäureamid, insbesondere Erucasäureamid in der Komponente enthalten. Durch das Gleitmittel wird insbesondere der weiche Griff der ersten Spinnvlieslage und/oder der dritten Spinnvlieslage gewährleistet.

Eine sehr bevorzugte Ausführungsform der Erfindung ist dadurch gekennzeichnet, dass die gekräuselten Filamente der ersten Spinnvlieslage und/oder die gekräuselten Filamente der dritten Spinnvlieslage zwei Komponenten bzw. zumindest zwei Komponenten auf Basis von Polypropylen aufweisen, insbesondere auf Basis von Homopolypropylen aufweisen. Dabei kann zumindest eine Komponente auch eine Mischung von Polypropylenen bzw. von Homopolypropylenen sein. Gemäß einer empfohlenen Ausführungsform der Erfindung bestehen zwei Komponenten bzw. zumindest zwei Komponenten der gekräuselten Filamente der ersten Spinnvlieslage und/oder der gekräuselten Filamente der dritten Spinnvlieslage aus Polypropylen, insbesondere aus Homopolypropylen bzw. im Wesentlichen aus Polypropylen, insbesondere im Wesentlichen aus Homopolypropylen. Dabei besteht vorzugsweise jede Komponente zu mindestens 95 Gew.-%, bevorzugt zu mindestens 96 Gew.-% aus Polypropylen, insbesondere aus Homopolypropylen. Es liegt im Rahmen der Erfindung, dass zwei Komponenten bzw. zumindest zwei Komponenten der gekräuselten Filamente der ersten Spinnvlieslage und/oder der dritten Spinnvlieslage zumindest ein Additiv aufweisen und vorzugsweise zumindest ein Fettsäureamid, beispielsweise Erucasäureamid als Additiv bzw. als Gleitmittel aufweisen. Das Additiv, insbesondere das Fettsäureamid und beispielsweise das Erucasäureamid, ist zweckmäßigerweise zu 1 bis 3-Gew.-% bzw. zu 1.000 bis 5.000 ppm in der jeweiligen Komponente vorhanden. Eine besonders empfohlene Ausführungsform der Erfindung ist dadurch gekennzeichnet, dass die gekräuselten Filamente der ersten Spinnvlieslage und/oder die gekräuselten Filamente der dritten Spinnvlieslage als Bikomponentenfilamente ausgebildet sind und dass beide Komponenten der Bikomponentenfilamente aus Polypropylen, insbesondere aus Homopolypropylen bzw. im Wesentlichen aus Polypropylen, insbesondere im Wesentlichen aus Homopolypropylen bestehen.

Dabei kann zumindest eine Komponente auch eine Mischung von Polypropylenen bzw. von Homopolypropylenen sein.

Es liegt im Rahmen der Erfindung, dass für zumindest eine Komponente bzw. für die Komponenten der gekräuselten Filamente der ersten Spinnvlieslage und/oder der gekräuselten Filamente der dritten Spinnvlieslage Homopolypropylene eingesetzt werden, die auf Basis von Ziegler-Natta-Katalysatoren oder auf Basis von Metallocen-Katalysatoren hergestellt werden. Vorzugsweise beträgt die molekulare Gewichtsverteilung (MWD) der für zumindest eine Komponente der gekräuselten Filamente der ersten Spinnvlieslage und/oder der gekräuselten Filamente der dritten Spinnvlieslage eingesetzten Polypropylene 1,6 bis 4,5. Die molekulare Gewichtsverteilung wird dabei als M_{w}/Mₙ definiert. Es empfiehlt sich, dass der Schmelzpunkt der niedriger schmelzenden Komponente bzw. der am niedrigsten schmelzenden Komponente der gekräuselten Filamente der ersten Spinnvlieslage und/oder der gekräuselten Filamente der dritten Spinnvlieslage über 140 °C, bevorzugt über 150 °C liegt.

Eine bewährte Ausführungsform der Erfindung ist dadurch gekennzeichnet, dass die gekräuselten Filamente der ersten Spinnvlieslage und/oder die gekräuselten Filamente der dritten Spinnvlieslage zwei Komponenten bzw. zumindest zwei Komponenten auf Basis von Polypropylen, insbesondere auf Basis von Homopolypropylen aufweisen und wobei die beiden Polypropylene bzw. Homopolypropylene der beiden Komponenten sich in ihrer Schmelzflussrate (MFR) unterscheiden. Vorzugsweise ist die Schmelzflussrate der einen Komponente dabei zumindest 1,2-mal, zweckmäßigerweise zumindest 1,3-mal und bevorzugt zumindest 1,4-mal größer als die Schmelzflussrate der anderen Komponente. Die Schmelzflussrate wird im Rahmen der Erfindung zweckmäßigerweise nach ISO 1133, 230 °C/2.16kp gemessen.

Nach einer empfohlenen Ausführungsform der Erfindung weisen die gekräuselten Filamente der ersten Spinnvlieslage und/oder die gekräuselten Filamente der dritten Spinnvlieslage zumindest eine Komponente auf, die eine Mischung von Polypropylenen bzw. bevorzugt von Homopolypropylenen enthält. Zweckmäßigerweise besteht diese zumindest eine Komponente aus dieser Mischung aus Polypropylenen, insbesondere aus Homopolypropylenen bzw. im Wesentlichen aus dieser Mischung aus Polypropylenen, insbesondere aus Homopolypropylenen. Vorzugsweise enthält diese Mischung zwei Polypropylene, insbesondere zwei Homopolypropylene. Es liegt dabei im Rahmen der Erfindung, dass die Schmelzflussrate (MFR) eines Polypropylens, insbesondere Homopolypropylens größer ist als die Schmelzflussrate des anderen Polypropylens, insbesondere Homopolypropylens. Zweckmäßigerweise ist die Schmelzflussrate des einen Polypropylens, insbesondere Homopolypropylens zumindest 1,5-mal, bevorzugt zumindest 2-mal höher als die Schmelzflussrate des zweiten Polypropylens, insbesondere Homopolypropylens.

Eine besonders empfohlene Ausführungsform, der im Rahmen der Erfindung im Hinblick auf die Lösung des technischen Problems besondere Bedeutung zukommt, ist dadurch gekennzeichnet, dass die gekräuselten Filamente der ersten Spinnvlieslage und/oder die gekräuselten Filamente der dritten Spinnvlieslage einen Kräuselungsgrad von mehr als 2,5 Schlingen (loops) pro cm ihrer Länge, vorzugsweise von mehr als 3 Schlingen (loops) pro cm ihrer Länge aufweisen. Zweckmäßigerweise haben sowohl die gekräuselten Filamente der ersten Spinnvlieslage als auch die gekräuselten Filamente der dritten Spinnvlieslage diesen bevorzugten Kräuselungsgrad. Die Anzahl der Schlingen bzw. Kräuselschlingen (loops) pro cm Länge der Filamente wird dabei insbesondere nach der japanischen Norm JIS L-1015-1981 gemessen, indem die Kräuselungen unter einer Vorspannung von 2 mg/den in (1/10 mm) gezählt werden, wobei die ausgestreckte Länge der Filamente zugrunde liegt. Es wird eine Empfindlichkeit von 0,05 mm verwendet, um die Anzahl der Schlingen bzw. Kräuselschlingen zu bestimmen.

Es liegt im Rahmen der Erfindung, dass der Titer der gekräuselten Filamente der ersten Spinnvlieslage und/oder der gekräuselten Filamente der dritten Spinnvlieslage im Bereich von 0,8 bis 2,2 den, vorzugsweise im Bereich zwischen 1,0 und 2,0 den liegt.

Eine sehr empfohlene Ausführungsform des erfindungsgemäßen Verfahrens ist dadurch gekennzeichnet, dass zunächst die erste Spinnvlieslage aus gekräuselten Filamenten auf der Ablageeinrichtung, insbesondere auf dem Ablagesiebband abgelegt wird und dass diese erste Spinnvlieslage dann zunächst verfestigt bzw. vorverfestigt wird. Die Vorverfestigung erfolgt zweckmäßigerweise mit Hilfe eines Kalanders und bevorzugt mit einer Oberflächentemperatur des Kalanders zwischen 130 °C und 140 °C, beispielsweise von 135 °C. Es liegt weiterhin im Rahmen der Erfindung, dass auch die dritte Spinnvlieslage aus gekräuselten Filamenten vorverfestigt wird und zwar zweckmäßigerweise unter den vorgenannten Bedingungen für die erste Spinnvlieslage vorverfestigt wird. Dabei können Dehnungen für die erste und/oder für die dritte Spinnvlieslage von über 200 % erzielt werden.

Es liegt im Rahmen der Erfindung, dass die Endlosfilamente - insbesondere die Monokomponentenfilamente - der zweiten Spinnvlieslage aus zumindest einem Elastomer bestehen bzw. im Wesentlichen bestehen. Vorzugsweise bestehen diese Endlosfilamente bzw. Monokomponentenfilamente aus lediglich einem Elastomer bzw. im Wesentlichen aus lediglich einem Elastomer. Eine besonders bevorzugte Ausführungsform der Erfindung ist dadurch gekennzeichnet, dass das zumindest eine Elastomer bzw. das Elastomer für die Endlosfilamente der zweiten Spinnvlieslage ein Copolymer aus Propylen und Ethylen ist. Vorzugsweise beträgt der Propylenanteil dabei mehr als 60 Gew.- %, bevorzugt mehr als 70 Gew.-% und sehr bevorzugt mehr als 80 Gew.-%. Gemäß einer Ausführungsvariante beträgt die Schmelzflussrate (MFR) des zumindest einen Elastomers bzw. des Elastomers der zweiten Spinnvlieslage 10 g/10 min bis 30 g/10 min und bevorzugt 15 g/10 min bis 25 g/10 min. Die Schmelzflussrate wird vorzugsweise gemessen nach ISO 1133, 230 °C/2.16kp. Eine sehr empfohlene Ausführungsform der Erfindung ist dadurch gekennzeichnet, dass das Elastomer bzw. das als Elastomer eingesetzte Copolymer einen Schmelzpunkt zwischen 50 °C und 170 °C, bevorzugt zwischen 50 °C und 160 °C, besonders bevorzugt zwischen 50 °C und 130 °C aufweist.

Erfindungsgemäß weist das Polypropylen des Elastomers bzw. des Copolymers der Endlosfilamente, insbesondere der Monokomponentenfilamente der zweiten Spinnvlieslage eine Mesopentad-Fraktion (mmmm) von mehr als 70 %, vorzugsweise von mehr als 80 % und bevorzugt von mehr als 90 % auf. Es liegt im Rahmen der Erfindung, dass es sich bei dem Elastomer um ein niederkristallines isotaktisches Copolymer mit einer Mesopentad-Fraktion (mmmm) des Polypropylens von mehr als 70 %, bevorzugt von mehr als 80 % und sehr bevorzugt von mehr als 90 % handelt. - Zweckmäßigerweise werden die Endlosfilamente bzw. Monokomponentenfilamente der zweiten Spinnvlieslage mit einem Titer von 10 µm bis 50 µm, vorzugsweise von 20 µm bis 50 µm, bevorzugt von 20 µm bis 45 µm, besonders bevorzugt von 25 µm bis 45 µm und ganz besonders bevorzugt von 25 µm bis 40 µm erzeugt.

Bei der Erzeugung der Endlosfilamente bzw. Monokomponentenfilamente für die zweite Spinnvlieslage wird eine Fadengeschwindigkeit im Bereich von 500 m/min bis 1500 m/min bevorzugt. - Eine besonders empfohlene Ausführungsform der Erfindung ist dadurch gekennzeichnet, dass die zweite Spinnvlieslage nicht vorverfestigt wird bzw. nicht durch Kalandrieren vorverfestigt wird. Es liegt somit im Rahmen der Erfindung, dass die Faserablage nach der Ablage der zweiten Spinnvlieslage nicht vorverfestigt bzw. nicht durch Kalandrieren vorverfestigt wird.

Fernerhin liegt es im Rahmen der Erfindung, dass das Laminat aus zumindest der ersten Spinnvlieslage und der zweiten Spinnvlieslage oder das Laminat aus zumindest der ersten Spinnvlieslage, der zweiten Spinnvlieslage und der dritten Spinnvlieslage kalandriert wird. Nach Ablage der einzelnen Spinnvlieslagen erfolgt also gleichsam eine Endverfestigung des gesamten Laminates mittels zumindest eines Kalanders. Vorzugsweise wird die Kalandrierung dabei mit einem Pressflächenanteil bzw. Schweißflächenanteil des Kalanders von 8 % bis 15 % durchgeführt. Es liegt im Rahmen der Erfindung, dass die Kalandrierung mit einem Pressflächenanteil bzw. Schweißflächenanteil des Kalanders von 6 % bis 19 %, vorzugsweise von 6 % bis 15 % und bevorzugt von 6 % bis 12 % durchgeführt wird. Es empfiehlt sich, dass der Kalander zum Kalandrieren des Laminates eine Figurendichte von 10 bis 50 Figuren/cm², vorzugsweise von 10 bis 40 Figuren/cm², bevorzugt von 10 bis 35 Figuren/cm², besonders bevorzugt von 12 bis 33 Figuren/cm² und ganz besonders bevorzugt von 15 bis 30 Figuren/cm² aufweist. Empfohlenermaßen liegt der Liniendruck beim Kalandrieren im Bereich von 20 N/mm bis 50 N/mm. Es liegt im Rahmen der Erfindung, dass die Oberflächentemperatur zumindest einer Kalanderwalze des Kalanders 60 °C bis 90 °C und vorzugsweise 65 °C bis 85 °C beträgt. Durch die Auswahl des Bondingmusters kann bei dem Kalandrieren des Laminates die Steifigkeit bzw. die Elastizität des Laminates in Maschinenrichtung (MD) und/oder quer zur Maschinenrichtung (CD) beeinflusst werden. - Zweckmäßigerweise ist die Oberflächentemperatur des Kalanders bzw. der zumindest einen Kalanderwalze des Kalanders geringer als die Schmelztemperatur der am niedrigsten schmelzenden Komponente der ersten Spinnvlieslage und/oder der dritten Spinnvlieslage. Vorzugsweise beträgt dabei die Temperaturdifferenz zwischen der Oberflächentemperatur des Kalanders bzw. der Kalanderwalze und der Schmelztemperatur der am niedrigsten schmelzenden Komponente der ersten und/oder der dritten Spinnvlieslage mindestens 60 °C, vorzugsweise mindestens 65 °C, bevorzugt mindestens 70 °C und sehr bevorzugt mindestens 75 °C. Dadurch kann erreicht werden, dass bei einem späteren Reckprozess die Filamente der ersten Spinnvlieslage und/oder die Filamente der dritten Spinnvlieslage nicht aus ihren Bondingpunkten herausgerissen werden.

Es liegt im Rahmen der Erfindung, dass die Schmelztemperatur des Elastomers der zweiten Spinnvlieslage geringer ist als die Schmelztemperatur der am niedrigsten schmelzenden Komponente der ersten Spinnvlieslage und/oder der dritten Spinnvlieslage. Der Erfindung liegt die Erkenntnis zugrunde, dass die niedrig schmelzende zweite Spinnvlieslage (Kernlage) gleichsam die Bindungsmasse für das Laminat bildet. Die Filamente der ersten und der dritten Spinnvlieslage bilden untereinander lediglich schwache Filamentverbindungspunkte aus und somit ist während einer Dehnung des Laminates eine zusätzliche Bewegungsfreiheit gewährleistet. Erst durch diese Bewegungsfreiheit erreicht man die benötigte Dehnfähigkeit beim optionalen nachträglichen Aktivieren bzw. Recken des Laminates.

Es liegt im Rahmen der Erfindung, dass das Laminat aus zumindest der ersten Spinnvlieslage und der zweiten Spinnvlieslage oder das Laminat aus zumindest der ersten Spinnvlieslage, der zweiten Spinnvlieslage und der dritten Spinnvlieslage gereckt wird bzw. in Maschinenrichtung (MD) und/oder quer zur Maschinenrichtung (CD) gereckt wird. Das Recken kann dabei nach einer Ausführungsform des erfindungsgemäßen Verfahrens inline also unmittelbar nach der Erzeugung des Laminates durchgeführt werden. Gemäß einer anderen Ausführungsform des erfindungsgemäßen Verfahrens wird das Recken offline, vorzugsweise in einer anderen Anlage bzw. Vorrichtung durchgeführt. So kann beispielsweise das erzeugte Laminat - vorzugsweise nach der Endverfestigung bzw. nach dem Kalandrieren - aufgewickelt werden und dann später in einer anderen Anlage - beispielsweise in einer Windelanlage - wieder abgewickelt und gereckt werden. Das Laminat kann vor dem Recken vorgewärmt werden.

Gemäß einer Ausführungsvariante des Reckprozesses kann ein Recken des Laminates in Maschinenrichtung (MD) mittels zumindest eines Zahnradwalzenpaares mit zwei Zahnradwalzen erfolgen, die ineinander greifen und zwischen denen das Laminat hindurchgeführt wird. Dabei ist eine Mehrzahl von Zähnen über den Umfang jeder Zahnradwalze verteilt angeordnet und diese Zähne erstrecken sich jeweils parallel zur Längsachse jeder Zahnradwalze.

Gemäß einer anderen Ausführungsvariante kann die Reckung des Laminates in Maschinenrichtung (MD) dadurch erfolgen, dass das Laminat durch den Spalt zwischen zumindest zwei Reckwalzenpaaren hindurchgeführt wird und dass dabei das zweite Reckwalzenpaar bzw. ein nachgeschaltetes Reckwalzenpaar eine höhere Rotationsgeschwindigkeit aufweist als das erste Reckwalzenpaar. Es ist dabei auch möglich, dass mehrere Reckwalzenpaare beteiligt werden, wobei das Laminat zwischen den Reckwalzen eines erstens Reckwalzenpaares hindurchgeführt wird, das mit einer ersten Rotationsgeschwindigkeit rotiert. Im Anschluss daran ist zumindest ein zweites Reckwalzenpaar nachgeschaltet, durch das das Laminat geführt wird, wobei dieses zweite Reckwalzenpaar eine höhere Rotationsgeschwindigkeit der Reckwalzen aufweist als das erste Reckwalzenpaar. Dem zweiten Reckwalzenpaar können weitere Reckwalzenpaare nachgeschaltet werden, die von dem Laminat durchlaufen werden. Zweckmäßigerweise sinkt die Rotationsgeschwindigkeit von dem zweiten Reckwalzenpaar zu den nachfolgenden Reckwalzenpaaren kontinuierlich. Die eingesetzten Reckwalzen können auch beheizt werden. Die Reckstrecke beim Recken mit den Reckwalzenpaaren beträgt in Maschinenrichtung vorzugsweise 200 bis 500 mm. - Nach einer Ausführungsform können die beiden vorstehend beschriebenen Reckmaßnahmen in Maschinenrichtung (MD) kombiniert werden.

Zusätzlich oder alternativ kann das Laminat - vorzugsweise das endverfestigte bzw. kalandrierte Laminat - quer zur Maschinenrichtung (CD) gereckt werden. Zweckmäßigerweise erfolgt dieses Recken quer zur Maschinenrichtung mittels zumindest eines Querreckwalzenpaares, zwischen denen das Laminat hindurchgeführt wird. Empfohlenermaßen weisen beide Querreckwalzen entlang ihrer Längsachse nebeneinander und mit Abstand zueinander angeordnete Walzenscheiben auf. Durch den Eingriff der Walzenscheiben in das Laminat erfolgt ein Recken des Laminates in Querrichtung bzw. quer zur Maschinenrichtung. Das Recken in Maschinenrichtung (MD) kann mit dem Recken quer zur Maschinenrichtung (CD) kombiniert werden.

Zur Lösung des technischen Problems lehrt die Erfindung weiterhin ein Vlieslaminat gemäß Patentanspruch 15.

Gemäß einer bevorzugten Ausführungsform des erfindungsgemäßen Vlieslaminates handelt es sich bei den Endlosfilamenten des zweiten Spinnvlieses um Monokomponentenfilamente. Gemäß einer alternativen Ausführungsform handelt es sich bei den Endlosfilamenten des zweiten Spinnvlieses um Bikomponentenfilamente, die bevorzugt als Bikomponentenfilamente mit Kern-Mantel-Konfiguration, insbesondere mit zentrischer Kern-Mantel-Konfiguration, ausgebildet sind.

Es liegt im Rahmen der Erfindung, dass das Vlieslaminat eine dritte Spinnvlieslage umfasst, wobei diese dritte Spinnvlieslage gekräuselte Mehrkomponentenfilamente bzw. gekräuselte Bikomponentenfilamente aufweist. Empfohlenermaßen weisen diese gekräuselten Filamente der dritten Spinnvlieslage einen Kräuselungsgrad von mehr als 2,5 Schlingen (loops) pro cm ihrer Länge, bevorzugt von mehr als 3 Schlingen (loops) pro cm ihrer Länge auf. - Eine besonders bevorzugte Ausführungsform der Erfindung ist dadurch gekennzeichnet, dass der Titer der Endlosfilamente der ersten Spinnvlieslage und/oder der Endlosfilamente der dritten Spinnvlieslage 1,0 bis 2,0 den beträgt. Vorzugsweise beträgt der Titer der Endlosfilamente der ersten Spinnvlieslage und/oder der Endlosfilamente der dritten Spinnvlieslage 12 µm bis 25 µm, bevorzugt 14 µm bis 20 µm und besonders bevorzugt 16 µm bis 18 µm.

Es liegt im Rahmen der Erfindung, dass das Vlieslaminat zumindest zwei, vorzugsweise zumindest drei zweite Spinnvlieslagen aufweist. Empfohlenermaßen bilden diese zweiten Spinnvliese bzw. diese zweiten Spinnvlieslagen zwei bzw. drei Kernlagen zwischen der ersten und der dritten Spinnvlieslage, sodass ein zumindest vierlagiges bzw. fünflagiges Vlieslaminat gebildet wird.

Der Erfindung liegt die Erkenntnis zugrunde, dass mit dem erfindungsgemäßen Verfahren ein Vlieslaminat hergestellt werden kann, das sich durch eine optimale Kombination von Eigenschaften auszeichnet. Dieses Vlieslaminat ist zum einen ausreichend weich ausgebildet und weist zudem hervorragende elastische Eigenschaften auf. Das Vlieslaminat ist einerseits dehnfähig und besitzt andererseits ausreichende elastische Rückstellkräfte. Bei vielen aus dem Stand der Technik bekannten elastischen Vliesen bzw. Vlieslaminaten resultiert ein gummiartiger Griff. Im Rahmen der Erfindung kann dieser nachteilhafte gummiartige Griff vermieden werden. Das erfindungsgemäß erzeugte Vlieslaminat kann auf verhältnismäßig einfache und kostengünstige Weise erzeugt werden. Der Aufwand bei der Herstellung ist geringer als bei vielen aus dem Stand der Technik bekannten Maßnahmen zur Erzeugung von elastischen Vliesen bzw. von elastischen Vlieslaminaten. Die erfindungsgemäß erzeugten Vlieslaminate können als Hygieneprodukte eingesetzt werden und beispielsweise im Bereich der figurbetonten unterwäscheähnlichen Windel- und Inkontinenzprodukte verwendet werden.

Nachfolgend wird die Erfindung anhand einer lediglich ein Ausführungsbeispiel darstellenden Zeichnung näher erläutert. Es zeigen in schematischer Darstellung:
- Fig. 1:: Einen Vertikalschnitt durch eine bevorzugte Ausführungsform einer Spinneinrichtung zur Erzeugung einer Spinnvlieslage für das erfindungsgemäße Vlieslaminat,
- Fig. 2:: eine Seitenansicht einer bevorzugten Ausführungsform einer Vorrichtung zur Herstellung eines erfindungsgemäßen Vlieslaminates,
- Fig. 3:: eine erste Ausführungsform einer Reckvorrichtung zum Recken eines erfindungsgemäßen Vlieslaminates in Maschinenrichtung (MD),
- Fig. 4:: eine zweite Ausführungsform einer Reckvorrichtung zum Recken eines erfindungsgemäßen Vlieslaminates in Maschinenrichtung (MD),
- Fig. 5:: eine Ausführungsform einer Reckvorrichtung zum Recken eines erfindungsgemäßen Vlieslaminates quer zur Maschinenrichtung (CD) a) in Frontansicht, b) in Seitenansicht und
- Fig. 6:: einen Schnitt durch ein erfindungsgemäßes Vlieslaminat
a) im ungereckten Zustand,
b) im teilweise gereckten Zustand und
c) in vollständig gerecktem Zustand.

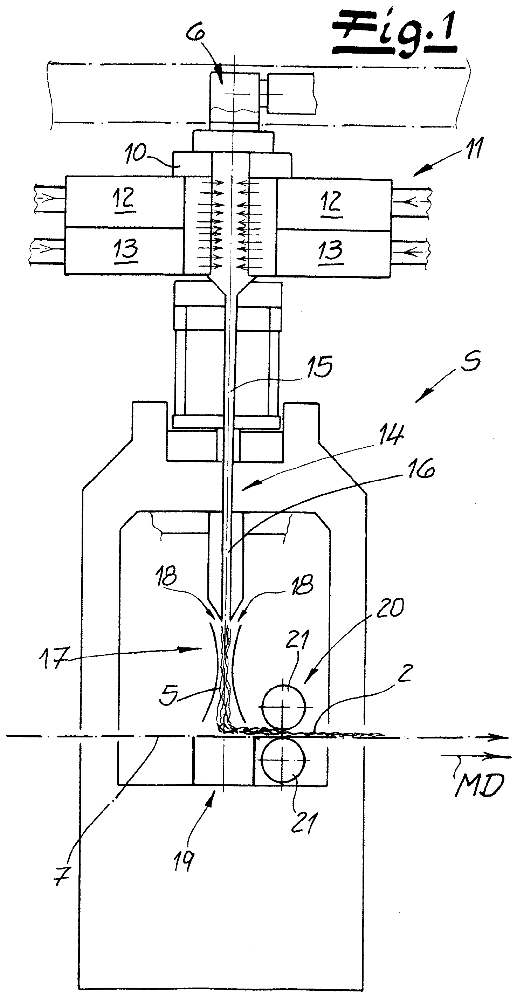

Die Fig. 1 zeigt eine besonders bevorzugte Ausführungsform einer Spinnvorrichtung zur Erzeugung einer der Spinnvlieslagen 2, 3, 4 für das erfindungsgemäße Vlieslaminat 1. Die einzelnen Lagen des Vlieslaminates 1 werden erfindungsgemäß als Spunbond-Vliese (Spinnvliese) erzeugt. Dementsprechend wird mit einer Spinnvorrichtung gemäß Fig. 1 ein Spunbond-Verfahren zur Erzeugung eines Spinnvlieses bzw. eines Spunbond-Vlieses durchgeführt. Dazu werden Endlosfilamente 5 aus thermoplastischem Kunststoff mittels einer Spinnerette 6 ersponnen und diese Endlosfilamente 5 werden dann vorzugsweise unterhalb der Spinnerette 6 durch eine Monomerabsaugungsvorrichtung 10 zur Absaugung von beim Spinnprozess entstehenden Gasen geführt. In Strömungsrichtung der Endlosfilamente 5 ist bevorzugt unterhalb der Monomerabsaugungsvorrichtung 10 eine Kühleinrichtung 11 zur Kühlung der Endlosfilamente 5 vorgesehen. Empfohlenermaßen und im Ausführungsbeispiel weist diese Kühleinrichtung 11 eine Luftzufuhrkabine auf, die im Ausführungsbeispiel in zwei Kabinenabschnitte 12, 13 unterteilt ist. Aus diesen beiden Kabinenabschnitten 12, 13 kann bevorzugt und im Ausführungsbeispiel jeweils Prozessluft bzw. Kühlluft unterschiedlicher Temperatur in Richtung des Filamentbündels zugeführt werden. An die Kühleinrichtung 11 schließt vorzugsweise und im Ausführungsbeispiel in Strömungsrichtung der Endlosfilamente 5 eine Verstreckeinheit 14 an. Diese Verstreckeinheit 14 weist empfohlenermaßen und im Ausführungsbeispiel einen in Strömungsrichtung der Endlosfilamente 5 konvergierenden Zwischenkanal 15 sowie einen daran anschließenden Verstreckkanal 16 auf. Nach sehr bevorzugter Ausführungsform und im Ausführungsbeispiel ist das Aggregat aus der Kühleinrichtung 11 und der Verstreckeinheit 14 als geschlossenes System ausgebildet. In diesem geschlossenen System findet außer der Zuführung der Kühlluft in der Kühleinrichtung 11 keine weitere Luftzufuhr statt.

Gemäß bewährter Ausführungsform der Erfindung schließt in Strömungsrichtung der Endlosfilamente 5 an die Verstreckeinheit 14 ein Diffusor 17 an. Zweckmäßigerweise und im Ausführungsbeispiel werden die Endlosfilamente 5 im Anschluss an den Diffusor 17 auf einer als Ablagesiebband 7 ausgebildeten Ablageeinrichtung zur Spinnvlieslage 2, 3, 4 abgelegt. Bevorzugt und im Ausführungsbeispiel sind im Übrigen zwischen der Verstreckeinheit 14 bzw. dem Verstreckkanal 16 und dem Diffusor 17 Lufteintrittspalte 18 angeordnet, durch welche Lufteintrittspalte 18 ein Luftvolumenstrom bzw. Sekundärluftvolumenstrom in den Diffusor 17 eingeführt wird.

Nach bevorzugter Ausführungsform und im Ausführungsbeispiel ist die Ablageeinrichtung der Spinnvorrichtung S als luftdurchlässiges Ablagesiebband 7 ausgebildet. Vorzugsweise und im Ausführungsbeispiel wird von der der Spinnvlieslage 2 abgewandten Unterseite des Ablagesiebbandes 7 her Saugluft durch das Ablagesiebband 7 gesaugt. Dazu ist zumindest eine Saugvorrichtung 19 unterhalb des Ablagesiebbandes 7 angeordnet. - Vorzugsweise wird die Spinnvlieslage 2 nach ihrer Ablage vorverfestigt und zwar bevorzugt und im Ausführungsbeispiel mit einem Vorverfestigungskalander 20, der zwei Vorverfestigungskalanderwalzen 21 aufweist. Die Spinnvlieslage 2 wird dann in Maschinenrichtung MD mit Hilfe des Ablagesiebbandes 7 weiter gefördert.

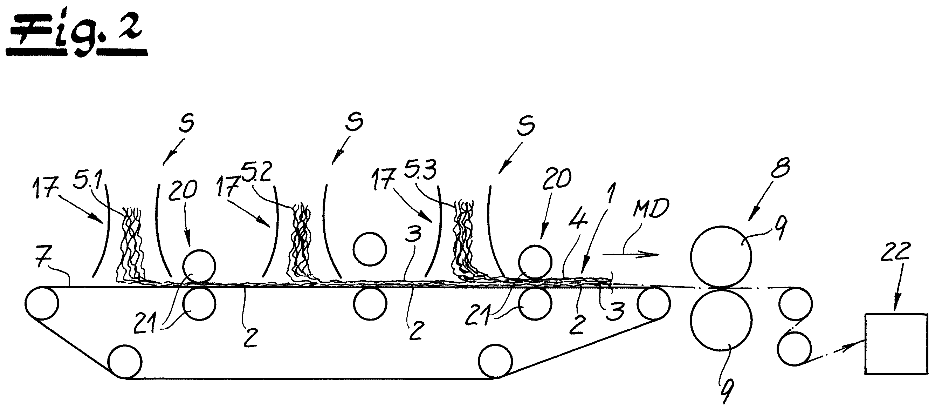

Die Fig. 2 zeigt eine bevorzugte Ausführungsform einer erfindungsgemäßen Vorrichtung zur Erzeugung eines dreilagigen Vlieslaminates 1 aus einer ersten Spinnvlieslage 2, einer zweiten Spinnvlieslage 3 und einer dritten Spinnvlieslage 4. Die Spinnvlieslagen 2, 3, 4 werden dabei jeweils mit einer Spinnvorrichtung S gemäß Fig. 1 erzeugt. Der Einfachheit halber ist in der Fig. 2 jeweils lediglich der Diffusor 17 dieser Spinnvorrichtungen S dargestellt. Vorzugsweise und im Ausführungsbeispiel gemäß Fig. 2 werden zunächst mit der ersten Spinnvorrichtung S auf der linken Seite der Fig. 2 Endlosfilamente 5 in Form von Bikomponentenfilamenten 5.1 erzeugt und auf dem Ablagesiebband 7 zur ersten Spinnvlieslage 2 abgelegt. Die Bikomponentenfilamente 5.1 weisen bevorzugt und im Ausführungsbeispiel eine Seite-an-Seite-Konfiguration auf und beide Komponenten dieser Bikomponentenfilamente 5.1 sind bevorzugt und im Ausführungsbeispiel als Homopolypropylene ausgebildet. Nach einer empfohlenen Ausführungsvariante unterscheiden sich die Homopolypropylene der beiden Komponenten der Bikomponentenfilamente 5.1 zumindest in ihrer Schmelzpunktrate (MFR). Dabei ist vorzugsweise die Schmelzflussrate der einen Komponente zumindest 1,2-mal, insbesondere 1,3-mal größer als die Schmelzflussrate der anderen Komponente. Die Bikomponentenfilamente 5.1 sind bevorzugt und im Ausführungsbeispiel als gekräuselte Filamente ausgebildet und sie weisen zweckmäßigerweise einen Kräuselungsgrad von mehr als 2,5 Schlingen (loops) pro cm ihrer Länge auf und besonders bevorzugt von mehr als 3 Schlingen (loops) pro cm ihrer Länge auf. Die erste Spinnvlieslage 2 wird bewährtermaßen und im Ausführungsbeispiel mittels eines Vorverfestigungskalanders 20 mit zwei Vorverfestigungskalanderwalzen 21 vorverfestigt.

In Maschinenrichtung MD ist der ersten linken Spinnvorrichtung S eine mittlere Spinnvorrichtung S nachgeschaltet, mit der zweckmäßigerweise und im Ausführungsbeispiel Endlosfilamente in Form von Monokomponentenfilamenten 5.2 erzeugt werden und zur zweiten Spinnvlieslage 3 abgelegt werden. Diese Monokomponentenfilamente 5.2 des zweiten Spinnvlieses weisen erfindungsgemäß ein Elastomer auf Basis von Polypropylen auf. Zweckmäßigerweise bestehen die Monokomponentenfilamente 5.2 aus diesem Elastomer bzw. im Wesentlichen aus diesem Elastomer. Dabei handelt es sich vorzugsweise um ein Elastomer in Form eines Copolymers aus Propylen und Ethylen. Dieses Copolymer weist empfohlenermaßen einen Schmelzpunkt zwischen 50 °C und 160 °C auf. Bei den Monokomponentenfilamenten 5.2 handelt es sich zweckmäßigerweise und im Ausführungsbeispiel um nicht gekräuselte Endlosfilamente 5. Eine besonders bevorzugte Ausführungsform der Erfindung ist dadurch gekennzeichnet, dass das Polypropylen des Elastomers bzw. des Copolymers der Monokomponentenfilamente 5.2 eine Mesopentad-Fraktion (mmmm) von mehr als 90 % aufweist. Die Monokomponentenfilamente 5.2 der zweiten Spinnvlieslage 3 weisen bevorzugt und im Ausführungsbeispiel einen Titer von 25 µm bis 40 µm auf. Es liegt im Rahmen der Erfindung, dass die zweite Spinnvlieslage 3 nicht vorverfestigt wird. Das Teillaminat aus der ersten Spinnvlieslage 2 und der darauf angeordneten zweiten Spinnvlieslage 3 wird im Ausführungsbeispiel anschließend mit dem Ablagesiebband 7 in Maschinenrichtung MD weiter gefördert und zwar zu der dritten Spinnvorrichtung S rechts in der Fig. 2.

Mit der dritten Spinnvorrichtung S werden vorzugsweise und im Ausführungsbeispiel Endlosfilamente 5 in Form von Bikomponentenfilamenten 5.3 erzeugt und als dritte Spinnvlieslage 4 auf der zweiten Spinnvlieslage 3 des Teillaminates abgelegt. Bei den Bikomponentenfilamenten 5.3 handelt es sich bevorzugt und im Ausführungsbeispiel um gekräuselte Bikomponentenfilamente 5.2, wobei diese Bikomponentenfilamente 5.2 vorzugsweise und im Ausführungsbeispiel einen Kräuselungsgrad von mehr als 2,5 Schlingen (loops) pro cm ihrer Länge, insbesondere von mehr als 3 Schlingen (loops) pro cm ihrer Länge aufweisen. Bevorzugt und im Ausführungsbeispiel zeigen die Bikomponentenfilamente 5.3 eine Seite-an-Seite-Konfiguration und zweckmäßigerweise bestehen die beiden Komponenten der Bikomponentenfilamente 5.3 aus Polypropylen, insbesondere aus Homopolypropylen bzw. im Wesentlichen aus Polypropylen, insbesondere im Wesentlichen aus Homopolypropylen. Zweckmäßigerweise unterscheiden sich die beiden Komponenten der Bikomponentenfilamente 5.3 der dritten Spinnvlieslage 4 in ihrer Schmelzflussrate (MFR). Bevorzugt ist die Schmelzflussrate der einen Komponente zumindest 1,2-mal, insbesondere zumindest 1,3-mal größer als die Schmelzflussrate der anderen Komponente. Nach ihrer Ablage wird die dritte Spinnvlieslage 4 bevorzugt und im Ausführungsbeispiel mittels eines Vorverfestigungskalanders 20 mit Vorverfestigungskalanderwalzen 21 vorverfestigt.

Nach besonders bevorzugter Ausführungsform und im Ausführungsbeispiel wird anschließend das Laminat 1 aus der ersten Spinnvlieslage 2, der zweiten Spinnvlieslage 3 und der dritten Spinnvlieslage 4 mittels eines Kalanders 8 mit Kalanderwalzen 9 kalandriert bzw. endverfestigt. Dabei weist der Kalander vorzugsweise und im Ausführungsbeispiel einen Pressflächenanteil von 8 % bis 15 % auf. Empfohlenermaßen wird das Laminat mittels eines Kalanders 8 mit einer Figurendichte von 15 bis 30 Figuren/cm² kalandriert. Bewährtermaßen beträgt die Oberflächentemperatur zumindest einer Kalanderwalze 9 des Kalanders 8 65 °C bis 85 °C. - Im Anschluss an die Kalandrierung bzw.

Endverfestigung wird das Vlieslaminat 1 nach besonders bevorzugter Ausführungsform und im Ausführungsbeispiel mittels einer Reckvorrichtung 22 gereckt. Das Recken mittels der Reckvorrichtung 22 kann dabei nach einer Ausführungsform unmittelbar (inline) im Anschluss an die Bildung des Vlieslaminates 1 erfolgen. Es liegt aber auch im Rahmen der Erfindung, dass das Vlieslaminat 1 (offline) insbesondere an einem anderen Ort bzw. in einer anderen Anlage gereckt wird. Dazu wird das Vlieslaminat 1 zweckmäßigerweise nach seiner Erzeugung aufgewickelt und später insbesondere an einem anderen Ort mit zumindest einer Reckvorrichtung 22 gereckt.

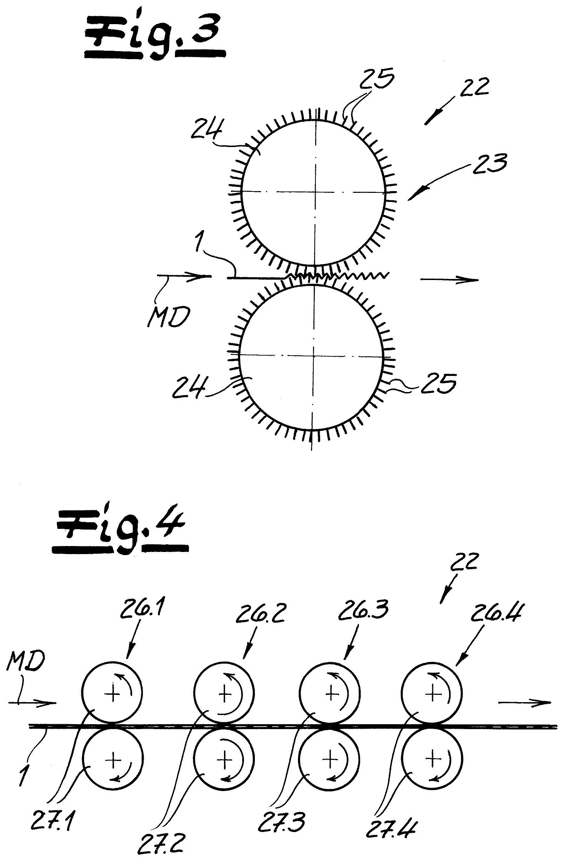

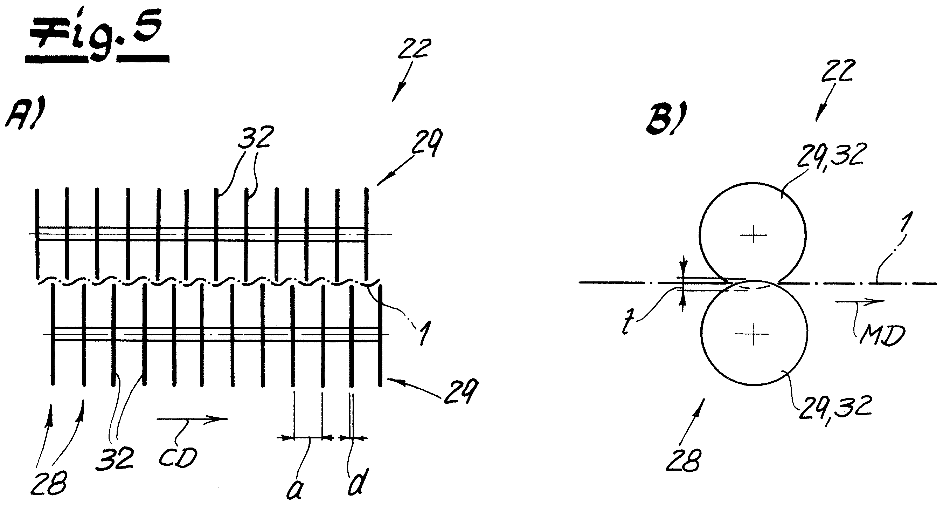

Die Fig. 3 bis 5 zeigen bevorzugte Ausführungsformen einer Reckvorrichtung 22 zum Recken des erfindungsgemäß hergestellten Vlieslaminates 1. Es liegt im Rahmen der Erfindung, dass zwei Reckvorrichtungen 22 oder alle drei Reckvorrichtungen 22 miteinander kombiniert werden können. Grundsätzlich kann auch lediglich eine der Reckvorrichtungen 22 eingesetzt werden. Die in den Fig. 3 und 4 dargestellten Reckvorrichtungen 22 dienen zum Recken des Vlieslaminates 1 in Maschinenrichtung MD und die in der Fig. 5 dargestellte Reckvorrichtung 22 dient zum Recken des Vlieslaminates 1 quer zur Maschinenrichtung, das heißt in CD-Richtung.

Die in der Fig. 3 gezeigte Reckvorrichtung 22 zum Recken des Vlieslaminates 1 in MD-Richtung besteht aus einem Zahnradwalzenpaar 23 mit zwei ineinander greifenden Zahnradwalzen 24. Diese beiden Zahnradwalzen 24 weisen jeweils eine Mehrzahl von Zähnen 25 auf, die über den Umfang jeder Zahnradwalze 24 verteilt angeordnet sind und diese Zähne 25 erstrecken sich jeweils parallel zur Längsachse jeder Zahnradwalze 24. Das Vlieslaminat 1 wird zwischen den beiden Zahradwalzen 24 zur Längsreckung hindurchgeführt, wobei die Zähne 25 beider Zahnradwalzen 24 in das Vlieslaminat 1 eingreifen.

Die Fig. 4 zeigt eine weitere Ausführungsform einer Reckvorrichtung 22 zur Reckung des Vlieslaminates 1 in MD-Richtung. Vorzugsweise und im Ausführungsbeispiel gemäß Fig. 4 sind Reckwalzenpaare 26 aus jeweils zwei Reckwalzen 27 vorgesehen und das Vlieslaminat 1 wird durch den Nip der Reckwalzenpaare 26 hindurchgeführt. Zweckmäßigerweise und im Ausführungsbeispiel ist ein erstes Reckwalzenpaar 26.1 mit zwei Reckwalzen 27.1 vorgesehen sowie ein zweites Reckwalzenpaar 26.2 mit zwei Reckwalzen 27.2. Bevorzugt und im Ausführungsbeispiel rotieren die Reckwalzen 27.2 des zweiten Reckwalzenpaares 26.2 mit einer höheren Rotationsgeschwindigkeit als die Reckwalzen 27.1 des ersten Reckwalzenpaares 26.1, wodurch eine Reckung des Vlieslaminates 1 erzeugt wird. Empfohlenermaßen und im Ausführungsbeispiel ist ein drittes Reckwalzenpaar 26.3 mit Reckwalzen 27.3 und ein viertes Reckwalzenpaar 26.4 mit Reckwalzen 27.4 vorgesehen. Bewährtermaßen und im Ausführungsbeispiel sinkt die Rotationsgeschwindigkeit der Reckwalzen 27 von dem zweiten Reckwalzenpaar 26.2 zum vierten Reckwalzenpaar 26.4 hin. Grundsätzlich können auch weitere Reckwalzenpaare 26 beteiligt werden.

In Fig. 5 ist eine bevorzugte Ausführungsform einer Reckvorrichtung 22 zur Reckung des Vlieslaminates 1 quer zur Maschinenrichtung, das heißt in CD-Richtung, dargestellt. Dazu wird bevorzugt und im Ausführungsbeispiel zumindest ein Querreckwalzenpaar 28 eingesetzt, das zwei Querreckwalzen 29 aufweist. Beide Querreckwalzen 29 weisen eine Mehrzahl von entlang ihrer jeweiligen Längsachse nebeneinander und mit Abstand a zueinander angeordnete Walzenscheiben 32 auf. Das Vlieslaminat 1 wird zwischen den beiden Querreckwalzen 29 hindurchgeführt und durch das Eingreifen der Walzenscheiben 32 in das Vlieslaminat 1 erfolgt ein Recken des Vlieslaminates 1 in Querrichtung bzw. quer zur Maschinenrichtung (in CD-Richtung). Bevorzugt und im Ausführungsbeispiel sind die Querreckwalzen 29 jeweils aus einer Mehrzahl von nebeneinander angeordneten Walzenscheiben 32 aufgebaut. Empfohlenermaßen beträgt dabei die Dicke d der Walzenscheiben 32 0,4 mm bis 2 mm, vorzugsweise 0,5 mm bis 1,8 mm und besonders bevorzugt 0,6 mm bis 0,8 mm. Zweckmäßigerweise ist der Abstand a zwischen zwei Walzenscheiben 32 einer Querreckwalze 29 kleiner als 5 mm und bevorzugt kleiner als 3 mm, sehr bevorzugt kleiner als 2,5 mm. Es empfiehlt sich, dass die Eintauchtiefe t der beiden Querreckwalzen 29 2 mm bis 10 mm, vorzugsweise 3 mm bis 9 mm und bevorzugt 4 mm bis 9 mm beträgt. Besonders bewährt hat sich ein Querreckwalzenpaar 28 mit Querreckwalzen 29, deren Walzenscheiben 32 eine Dicke d von 0,5 mm bis 0,9 mm sowie einen gegenseitigen Abstand a von 1,5 mm bis 2,5 mm aufweisen und eine Eintauchtiefe t von 6 mm bis 8 mm.

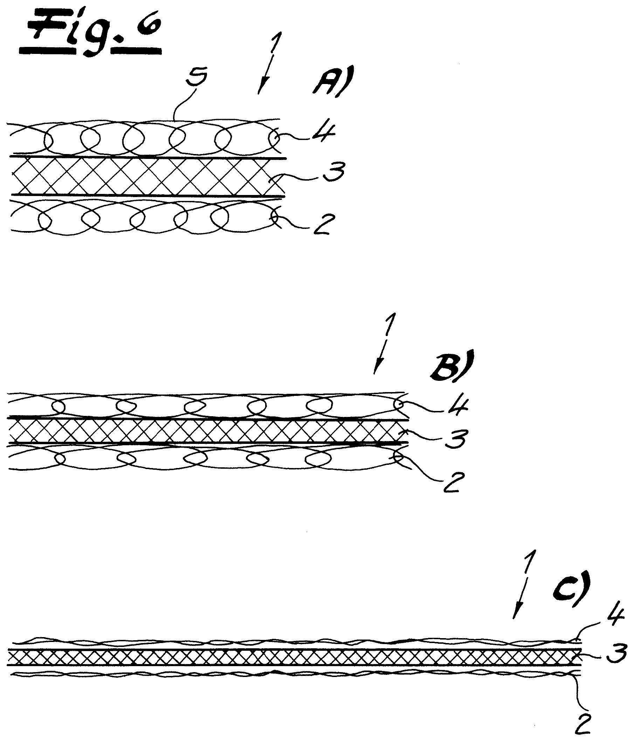

In der Fig. 6 wird die Reckung eines erfindungsgemäßen Vlieslaminates 1 veranschaulicht. Fig. 6a) zeigt dabei das Vlieslaminat 1 im noch nicht gereckten Zustand. In Fig. 6b) wird die teilweise Reckung des Vlieslaminates 1 gezeigt. Schließlich ist in der Fig. 6c) die maximale Reckung des Vlieslaminates 1 dargestellt.

### Ausführungsbeispiel:

Nachfolgend wird die Erfindung anhand eines Ausführungsbeispiels näher erläutert. Nach bevorzugter Ausführungsform weist ein erfindungsgemäßes Vlieslaminat 1 eine erste Spinnvlieslage 2, eine darauf angeordnete zweite Spinnvlieslage 3 und eine wiederum darauf angeordnete dritte Spinnvlieslage 4 auf. Die erste und die dritte Spinnvlieslage 2, 4 bilden somit Decklagen bzw. High-Loft-Decklagen für die zweite Spinnvlieslage 3 als elastische Kernlage. Zweckmäßigerweise und im Ausführungsbeispiel bestehen die Endlosfilamente 5 der ersten Spinnvlieslage 2 und der dritten Spinnvlieslage 4 aus Bikomponentenfilamenten 5.1, 5.3 mit Seite-an-Seite-Anordnung und die Endlosfilamente 5 der zweiten Spinnvlieslage 3 bestehen bevorzugt und im Ausführungsbeispiel aus Monokomponentenfilamenten 5.2. Die Bikomponentenfilamente 5.1 und 5.3 der ersten Spinnvlieslage 2 und der dritten Spinnvlieslage 4 sind als gekräuselte Bikomponentenfilamente 5.1, 5.3 ausgebildet. Dabei weisen empfohlenermaßen und im Ausführungsbeispiel sowohl die Bikomponentenfilamente 5.1 der ersten Spinnvlieslage 2 als auch die Bikomponentenfilamente 5.3 der dritten Spinnvlieslage 4 einen Kräuselungsgrad von mehr als 3 Schlingen (loops) pro cm ihrer Länge auf.

Empfohlenermaßen und im Ausführungsbeispiel besteht sowohl die erste Komponente der Bikomponentenfilamente 5.1 der ersten Spinnvlieslage 2 als auch die erste Komponente der Bikomponentenfilamente 5.3 der dritten Spinnvlieslage 4 im Wesentlichen aus einem Homopolypropylen, vorzugsweise zu mindestens 95 Gew.-% aus diesem Homopolypropylen. Nach einer besonders bevorzugten Ausführungsvariante weist die erste Komponente der Bikomponentenfilamente 5.1 und 5.3 97 bis 99 Gew.-% eines Homopolypropylens auf und 1 bis 3 Gew.-% eines Gleitmittels, vorzugsweise eines Fettsäureamids und besonders bevorzugt 2 % Erucasäureamid. Es empfiehlt sich, dass die Schmelzflussrate (MFR) der ersten Komponente der Bikomponentenfilamente 5.1 und der Bikomponentenfilamente 5.3 zwischen 28 g/10min und 42 g/10min und bevorzugt zwischen 30 g/10min und 40 g/10min liegt. - Zweckmäßigerweise und im Ausführungsbeispiel besteht die zweite Komponente der Bikompontenenfilamente 5.1 der ersten Spinnvlieslage 2 und der Bikomponentenfilamente 5.3 der dritten Spinnvlieslage 4 aus einer Mischung von Homopolypropylenen bzw. im Wesentlichen aus einer Mischung von Homopolypropylenen. Dabei weist das eine Homopolypropylen dieser Mischung vorzugsweise eine höhere Schmelzflussrate (MFR) auf als das zweite Homopolypropylen dieser Mischung. Das Massenverhältnis der beiden Homopolypropylene in der Mischung der zweiten Komponente der Bikomponentenfilamente 5.1 und 5.3 beträgt vorzugsweise 60:40 bis 70:30, wobei empfohlenermaßen das Homopolypropylen mit dem höheren Massenanteil auch die höhere Schmelzflussrate (MFR) aufweist. Zweckmäßigerweise enthält die zweite Komponente der Bikomponentenfilamente 5.1 und der Bikomponentefilamente 5.3 zumindest ein Additiv und zwar bevorzugt in Form eines Gleitmittels. Vorzugsweise sind 1 Gew.-% bis 3 Gew.-% dieses Additivs bzw. Gleitmittels in der zweiten Komponente vorhanden. Bei dem Gleitmittel handelt es sich bevorzugt um ein Fettsäureamid und insbesondere um Erucasäureamid. - Das Massenverhältnis der ersten Komponente zu der zweiten Komponente der Bikomponentenfilamente 5.1 und der Bikomponentenfilamente 5.3 beträgt bevorzugt und im Ausführungsbeispiel 60:40 bis 80:20, bevorzugt 65:35 bis 75:25 und beispielsweise 70:30.

Zweckmäßigerweise und im Ausführungsbeispiel bestehen die Monokomponentenfilamente 5.2 der zweiten Spinnvlieslage 3 aus einem Polypropylen-basierten Elastomer. Es empfiehlt sich, dass für die Monokomponentenfilamente 5.2 der zweiten Spinnvlieslage 3 ein Copolymer aus Propylen und Ethylen eingesetzt wird, wobei vorzugsweise der Propylenanteil mehr als 70 Gew.-% und bevorzugt mehr als 80 Gew.-% beträgt. Besonders bevorzugt handelt es sich bei dem Elastomer der Monokomponentenfilamente 5.2 um ein niederkristallines isotaktisches Copolymer mit einem Propylen- bzw. Polypropylen-Anteil, wobei das Polypropylen eine Mesopentad-Fraktion (mmmm) von mehr als 90 % aufweist.

In der nachstehenden Tabelle 1 werden Parameter für eine besonders bevorzugte Ausführungsform zur Herstellung eines erfindungsgemäßen Vlieslaminates 1 angegeben. Das Vlieslaminat 1 besteht dabei aus drei Spinnvlieslagen 2, 3, 4. Die Bikomponentenfilamente 5.1 und 5.3 der ersten Spinnvlieslage 2 und der dritten Spinnvlieslage 4 weisen jeweils eine erste Komponente in Form eines Homopolypropylens 1 auf. Dieser ersten Komponente können zweckmäßigerweise 2 Gew.-% Erucasäureamid als Gleitmittel zugefügt sein. Das Homopolypropylen 1 hat nach einer bevorzugten Ausführungsform der Erfindung eine Schmelzflussrate von 36 g/10min. Die zweite Komponente X2 der Bikomponentenfilamente 5.1 und der Bikomponentenfilamente 5.3 der ersten Spinnvlieslage 2 und der dritten Spinnvlieslage 4 besteht aus einer Mischung aus dem Homopolypropylen 1 und einem Homopolypropylen 2. Ein Mischungsbestandteil entspricht also dem Homopolypropylen 1 der ersten Komponente X1. Das Massenverhältnis des Homopolypropylens 1 zu dem Homopolypropylen 2 mag in der Mischung 65:35 betragen. Der zweiten Komponente kann ein Gleitmittel in Form von Erucasäureamid, beispielsweise in einer Menge von 2 Gew.-% zugefügt werden. Das Homopolypropylen 2 hat zweckmäßigerweise eine Schmelzflussrate von 13 g/min. Das Massenverhältnis der ersten Komponente X1 zu der zweiten Komponente X2 der Bikomponentenfilamente 5.1 und der Bikomponentenfilamente 5.3 der ersten Spinnvlieslage 2 und der dritten Spinnvlieslage 4 beträgt 70:30. Für die zweite Spinnvlieslage 3 werden Monokomponentenfilamente aus einem Elastomer in Form eines Copolymers aus Propylen und Ethylen eingesetzt. Der Propylen-Anteil beträgt dabei zweckmäßigerweise mehr als 80 Gew.-%. Die Mesopentad-Fraktion (mmmm) des Polypropylens beträgt mehr als 90 %. In den letzten beiden Spalten der Tabelle 1 sind besonders bevorzugte Werte für den Durchsatz in der Spinnerette 6 der jeweiligen Spinnvorrichtung S angegeben sowie der bevorzugte Kabinendruck in der jeweiligen Spinnvorrichtung S.

**Tabelle 1**

| Spinnvlieslage | 1. Komponente X1 | 2. Komponente X2 | Massenverhältnis X1/X2 | Durchsatz [g/Loch/min] | Kabinendruck [Pa] |
|---|---|---|---|---|---|
| Erste | Homopolypropylen 1 | Homopolypropylen 1 + Homopolypropylen 2 | 70:30 | 0,32 | 3800 |
| Zweite | Elastomer | - | - | 0,75 | 2800 |
| Dritte | Homopolypropylen 1 | Homopolypropylen 1 + Homopolypropylen 2 | 70:30 | 0,32 | 3800 |

## Patentansprüche

1. Verfahren zur Herstellung eines Vlieslaminates (1) mit zumindest zwei Vlieslagen, wobei die beiden Vlieslagen als Spinnvlieslagen (2, 3) erzeugt werden, wobei zur Erzeugung jeder Spinnvlieslage (2, 3) Endlosfilamente (5) mit zumindest einer Spinnerette (6) ersponnen werden, daraufhin abgekühlt werden und anschließend verstreckt werden und schließlich zu einer Vliesbahn bzw. Spinnvlieslage auf einer Ablageeinrichtung, insbesondere auf einem Ablagesiebband (7) abgelegt werden,
wobei zumindest eine erste Spinnvlieslage (2) bzw. zumindest ein erstes Spinnvlies aus gekräuselten Mehrkomponentenfilamenten, insbesondere aus gekräuselten Bikomponentenfilamenten (5.1) erzeugt wird, wobei die gekräuselten Filamente der ersten Spinnvlieslage (2) einen Kräuselungsgrad von mehr als 2,5 Schlingen (loops) pro cm ihrer Länge aufweisen,
wobei zumindest eine zweite Spinnvlieslage (3) bzw. zumindest ein zweites Spinnvlies aus Endlosfilamenten erzeugt wird, wobei die Endlosfilamente des zweiten Spinnvlieses ein Elastomer auf Basis von Polypropylen aufweisen
und wobei das Polypropylen des Elastomers der Endlosfilamente der zweiten Spinnvlieslage (3) eine Mesopentad-Fraktion (mmmm) von mehr als 70 % aufweist.

2. Verfahren nach Anspruch 1, wobei die zumindest eine zweite Spinnvlieslage (3) bzw. das zumindest eine zweite Spinnvlies aus Monokomponentenfilamenten (5.2) erzeugt wird.

3. Verfahren nach Anspruch 1 oder 2, wobei zumindest eine dritte Spinnvlieslage (4) bzw. zumindest ein drittes Spinnvlies aus gekräuselten Mehrkomponentenfilamenten, insbesondere aus gekräuselten Bikomponentenfilamenten (5.3) erzeugt wird und wobei die zweite Spinnvlieslage (3) zwischen der ersten Spinnvlieslage (2) und der dritten Spinnvlieslage (4) angeordnet wird.

4. Verfahren nach einem der Ansprüche 1 bis 3, wobei zumindest zwei, vorzugsweise zumindest drei zweite Spinnvlieslagen (3) bzw. zweite Spinnvliese aus Endlosfilamenten erzeugt werden.

5. Verfahren nach einem der Ansprüche 1 bis 4, wobei die gekräuselten Filamente (5.1, 5.3) der ersten Spinnvlieslage (2) und/oder der dritten Spinnvlieslage (4) als gekräuselte Filamente (5.1, 5.3) mit Seite-an-Seite-Konfiguration oder mit Kern-Mantel-Konfiguration, insbesondere mit exzentrischer Kern-Mantel-Konfiguration ausgebildet werden.

6. Verfahren nach einem der Ansprüche 1 bis 5, wobei die gekräuselten Filamente (5.1, 5.3) der ersten Spinnvlieslage (2) und/oder der dritten Spinnvlieslage (4) zumindest eine Komponente, vorzugsweise zwei Komponenten bzw. zumindest zwei Komponenten auf Basis von Polypropylen aufweisen, insbesondere auf Basis von Homopolypropylen aufweisen.

7. Verfahren nach einem der Ansprüche 1 bis 6, wobei die gekräuselten Filamente (5.1, 5.3) der ersten Spinnvlieslage (2) und/oder der dritten Spinnvlieslage (4) zwei Komponenten bzw. zumindest zwei Komponenten auf Basis von Polypropylen, insbesondere auf Basis von Homopolypropylen aufweisen und wobei die beiden Polypropylene bzw. Homopolypropylene der beiden Komponenten sich in ihrer Schmelzflussrate (MFR) unterscheiden und wobei vorzugsweise die Schmelzflussrate der einen Komponente zumindest 1, 2-mal, bevorzugt zumindest 1, 4-mal größer ist als die Schmelzflussrate der anderen Komponente.

8. Verfahren nach einem der Ansprüche 1 bis 7, wobei die Endlosfilamente (5), insbesondere Monokomponentenfilamente (5.2) der zweiten Spinnvlieslage (3) aus zumindest einem Elastomer bestehen bzw. im Wesentlichen bestehen, wobei das Elastomer insbesondere ein Copolymer aus Propylen und Ethylen ist und wobei das Copolymer vorzugsweise einen Schmelzpunkt zwischen 50 °C und 170 °C, bevorzugt zwischen 50 °C und 160 °C und besonders bevorzugt zwischen 50 °C und 130 °C aufweist.

9. Verfahren nach einem der Ansprüche 1 bis 8, wobei das Polypropylen des Elastomers der Endlosfilamente bzw. Monokomponentenfilamente (5.2) der zweiten Spinnvlieslage (3) eine Mesopentad-Fraktion (mmmm) von mehr als 80 % und bevorzugt von mehr als 90 % aufweist.

10. Verfahren nach einem der Ansprüche 1 bis 9, wobei die Endlosfilamente bzw. Monokomponentenfilamente (5.2) der zweiten Spinnvlieslage (3) mit einem Titer von 10 µm bis 50 µm, vorzugsweise von 20 µm bis 50 µm, bevorzugt von 20 µm bis 45 µm, besonders bevorzugt von 25 µm bis 45 µm, ganz besonders bevorzugt von 25 µm bis 40 µm erzeugt werden.

11. Verfahren nach einem der Ansprüche 1 bis 10, wobei das Laminat (1) aus zumindest der ersten Spinnvlieslage (2) und der zweiten Spinnvlieslage (3) oder das Laminat (1) aus zumindest der ersten Spinnvlieslage (2), der zweiten Spinnvlieslage (3) und der dritten Spinnvlieslage (4) kalandriert wird und wobei die Kalandrierung dabei vorzugsweise mit einem Pressflächenanteil bzw. Schweißflächenanteil des Kalanders (8) von 8 % bis 15 % durchgeführt wird.

12. Verfahren nach einem der Ansprüche 1 bis 11, wobei das Laminat (1) aus zumindest der ersten Spinnvlieslage (2) und der zweiten Spinnvlieslage (3) oder das Laminat aus zumindest der ersten Spinnvlieslage (2), der zweiten Spinnvlieslage (3) und der dritten Spinnvlieslage (4) mittels eines Kalanders (8) mit einer Figurendichte von 10 bis 50 Figuren/cm², vorzugsweise von 10 bis 40 Figuren/cm², bevorzugt von 10 bis 35 Figuren/cm², besonders bevorzugt von 12 bis 33 Figuren/cm², ganz besonders bevorzugt von 15 bis 30 Figuren/cm² kalandriert wird.

13. Verfahren nach einem der Ansprüche 1 bis 12, wobei das Laminat (1) aus zumindest der ersten Spinnvlieslage (2) und der zweiten Spinnvlieslage (3) oder das Laminat aus zumindest der ersten Spinnvlieslage (2), der zweiten Spinnvlieslage (3) und der dritten Spinnvlieslage (4) mittels eines Kalanders (8) kalandriert wird, wobei die Oberflächentemperatur zumindest einer Kalanderwalze (9) des Kalanders (8) 60 °C bis 90 °C, vorzugsweise 65 °C bis 85 °C beträgt.

14. Verfahren nach einem der Ansprüche 1 bis 13, wobei das Laminat (1) aus zumindest der ersten Spinnvlieslage (2) und der zweiten Spinnvlieslage (3) oder das Laminat (1) aus zumindest der ersten Spinnvlieslage (2), der zweiten Spinnvlieslage (3) und der dritten Spinnvlieslage (4) gereckt wird bzw. in Maschinenrichtung (MD) und/oder quer zur Maschinenrichtung (CD) gereckt wird.

15. Vlieslaminat (1) aus zumindest zwei Spinnvlieslagen (2, 3) - insbesondere hergestellt nach einem Verfahren gemäß einem der Ansprüche 1 bis 14 - wobei eine erste Spinnvlieslage (2) Endlosfilamente in Form von gekräuselten Mehrkomponentenfilamenten bzw. gekräuselten Bikomponentenfilamenten (5.1) aufweist, wobei die gekräuselten Filamente einen Kräuselungsgrad von mehr als 2,5 Schlingen (loops) pro cm ihrer Länge, bevorzugt von mehr als 3 Schlingen (loops) pro cm ihrer Länge aufweisen,
wobei eine zweite Spinnvlieslage (3) mit Endlosfilamenten vorgesehen ist, wobei diese Endlosfilamente der zweiten Spinnvlieslage (3) ein Elastomer auf Basis von Polypropylen aufweisen und wobei das Polypropylen eine Mesopentad-Fraktion (mmmm) von mehr als 70 %, vorzugsweise von mehr als 80 % und bevorzugt von mehr als 90 % aufweist.

16. Vlieslaminat (1) nach Anspruch 15, wobei das Vlieslaminat (1) eine dritte Spinnvlieslage (4) umfasst, wobei diese dritte Spinnvlieslage (4) gekräuselte Mehrkomponentenfilamente bzw. gekräuselte Bikomponentenfilamente (5.3) aufweist, wobei diese gekräuselten Filamente einen Kräuselungsgrad von mehr als 2,5 Schlingen (loops) pro cm ihrer Länge, bevorzugt von mehr als 3 Schlingen (loops) pro cm ihrer Länge aufweisen.

17. Vlieslaminat (1) nach einem der Ansprüche 15 oder 16, wobei der Titer der Endlosfilamente (5) der ersten Spinnvlieslage (2) und/oder der dritten Spinnvlieslage (4) 1,0 bis 2,0 den beträgt.

## Claims

1. Method for manufacturing a nonwoven laminate (1) having at least two nonwoven layers, wherein the two nonwoven layers are produced as spunbonded layers (2, 3), wherein continuous filaments (5) are spun using an least one spinneret (6) to produce each spunbonded layer (2, 3), are then cooled and then stretched and finally deposited to form a nonwoven web or spunbonded layer on a depositing device, in particular on a depositing foraminous belt (7),
wherein at least one first spunbonded layer (2) or at least one first spunbonded nonwoven is produced from crimped multicomponent filaments, in particular from crimped bicomponent filaments (5.1), wherein the crimped filaments of the first spunbonded layer (2) have a degree of crimp of more than 2.5 loops per cm of their length,
wherein at least one second spunbonded layer (3) or at least one second spunbonded nonwoven is produced from continuous filaments, wherein the continuous filaments of the second spunbonded nonwoven comprise a polypropylene-based elastomer
and wherein the polypropylene of the elastomer of the continuous filaments of the second spunbonded layer (3) has a mesopentad fraction (mmmm) of more than 70 %.

2. Method according to Claim 1, wherein the at least one second spunbonded layer (3) or the at least one second spunbonded nonwoven is produced from monocomponent filaments (5.2).

3. Method according to Claim 1 or 2, wherein at least one third spunbonded layer (4) or at least one third spunbonded nonwoven is produced from crimped multicomponent filaments, in particular from crimped bicomponent filaments (5.3) and wherein the second spunbonded layer (3) is arranged between the first spunbonded layer (2) and the third spunbonded layer (4).

4. Method according to one of Claims 1 to 3, wherein at least two, preferably at least three second spunbonded layers (3) or second spunbonded nonwovens are produced from continuous filaments.

5. Method according to one of Claims 1 to 4, wherein the crimped filaments (5.1, 5.3) of the first spunbonded layer (2) and/or the third spunbonded layer (4) are formed as crimped filaments (5.1, 5.3) with side-by-side configuration or with a core-sheath configuration, in particular with an eccentric core-sheath configuration.

6. Method according to one of Claims 1 to 5, wherein the crimped filaments (5.1, 5.3) of the first spunbonded layer (2) and/or the third spunbonded layer (4) have at least one component, preferably two components or at least two components based on polypropylene, in particular based on homopolypropylene.

7. Method according to one of Claims 1 to 6, wherein the crimped filaments (5.1, 5.3) of the first spunbonded layer (2) and/or the third spunbonded layer (4) comprise two components or at least two components based on polypropylene, in particular based on homopolypropylene and wherein the two polypropylenes or homopolypropylenes of the two components differ in their melt flow rate (MFR) and wherein the melt flow rate of one component is preferably at least 1.2 times greater, preferably at least 1.4 times greater than the melt flow rate of the other component.

8. Method according to one of Claims 1 to 7, wherein the continuous filaments (5), in particular monocomponent filaments (5.2) of the second spunbonded layer (3) consist or substantially consist of at least one elastomer, wherein the elastomer in particular is a copolymer of propylene and ethylene and wherein the copolymer preferably has a melting point between 50 °C and 170 °C, preferably between 50 °C and 160 °C and particularly preferably between 50 °C and 130 °C.

9. Method according to one of Claims 1 to 8, wherein the polypropylene of the elastomer of the continuous filaments or monocomponent filaments (5.2) of the second spunbonded layer (3) has a mesopentad fraction (mmmm) of more than 80 % and preferably of more than 90 %.

10. Method according to one of Claims 1 to 9, wherein the continuous filaments or monocomponent filaments (5.2) of the second spunbonded layer (3) are manufactured with a titre of 10 µm to 50 µm, preferably of 20 µm to 50 µm, preferably of 20 µm to 45 µm, particularly preferably of 25 µm to 45 µm, quite particularly preferably of 25 µm to 40 µm.

11. Method according to one of Claims 1 to 10, wherein the laminate (1) from at least the first spunbonded layer (2) and the second spunbonded layer (3) or the laminate (1) from at least the first spunbonded layer (2), the second spunbonded layer (3) and the third spunbonded layer (4) is calendered and wherein the calendering is preferably carried out with a pressing surface fraction or welding surface fraction of the calender (8) of 8 % to 15 %.

12. Method according to one of Claims 1 to 11, wherein the laminate (1) from at least the first spunbonded layer (2) and the second spunbonded layer (3) or the laminate from at least the first spunbonded layer (2), the second spunbonded layer (3) and the third spunbonded layer (4) is calendered by means of a calender (8) with a figure density of 10 to 50 figures/cm², preferably of 10 to 40 figures/cm², preferably of 10 to 35 figures/cm², particularly preferably of 12 to 33 figures/cm², quite particularly preferably of 15 to 30 figures/cm².

13. Method according to one of Claims 1 to 12, wherein the laminate (1) from at least the first spunbonded layer (2) and the second spunbonded layer (3) or the laminate from at least the first spunbonded layer (2), the second spunbonded layer (3) and the third spunbonded layer (4) is calendered by means of a calender (8) wherein the surface temperature of at least one calender roller (9) of the calender (8) is 60 °C to 90 °C, preferably 65 °C to 85 °C.

14. Method according to one of Claims 1 to 13, wherein the laminate (1) from at least the first spunbonded layer (2) and the second spunbonded layer (3) or the laminate (1) from at least the first spunbonded layer (2), the second spunbonded layer (3) and the third spunbonded layer (4) is stretched or is stretched in the machine direction (MD) and/or is stretched transversely to the machine direction (CD).

15. Nonwoven laminate (1) comprising at least two spunbonded layers (2, 3), in particular produced according to a method according to one of Claims 1 to 14, wherein a first spunbonded layer (2) comprises continuous filaments in the form of crimped multicomponent filaments or crimped bicomponent filaments (5.1), wherein the crimped filaments have a degree of crimp of more than 2.5 loops per cm of their length, preferably of more than 3 loops per cm of their length, wherein a second spunbonded layer (3) is provided with continuous filaments, wherein these continuous filaments of the second spunbonded layer (3) comprise a polypropylene-based elastomer and wherein the polypropylene has a mesopentad fraction (mmmm) of more than 70 %, preferably of more than 80 % and preferably of more than 90 %.

16. Nonwoven laminate (1) according to Claim 15, wherein the nonwoven laminate (1) comprises a third spunbonded layer (4) wherein this third spunbonded layer (4) comprises crimped multicomponent filaments or crimped bicomponent filaments (5.3), wherein these crimped filaments have a degree of crimp of more than 2.5 loops per cm of their length, preferably of more than 3 loops per cm of their length.

17. Laminate (1) according to one of Claims 15 or 16, wherein the titre of the continuous filaments (5) of the first spunbonded layer (2) and/or the third spunbonded layer (4) is 1.0 to 2.0 den.

## Revendications

1. Procédé, destiné à produire un stratifié non-tissé (1) comprenant au moins deux couches de non-tissé, les deux couches de non-tissé étant créées en tant que couches de filé-lié (2, 3), pour créer chaque couche de filé-lié (2, 3), des filaments continus (5) étant filés avec au moins une busette (6), étant refroidis ensuite et étant étirés par la suite et pour finir, étant déposés en une bande de non-tissé ou en une couche de filé-lié sur un dispositif de dépose, notamment sur une toile perforée de dépose (7),
au moins une première couche de filé-lié (2) ou au moins un premier filé-lié étant créé(e) à partir de filaments multicomposants crêpés, notamment de filaments bicomposants (5.1) crêpés, les filaments crêpés de la première couche de filé-lié (2) faisant preuve d'un taux de crêpage de plus de 2,5 boucles (loops) par cm de leur longueur,
au moins une deuxième couche de filé-lié (3) ou au moins un deuxième filé-lié étant créé(e) à partir de filaments continus, les filaments continus du deuxième filé-lié comportant un élastomère sur la base de polypropylène
et le polypropylène de l'élastomère des filaments continus de la deuxième couche de filé-lié (3) présentant une fraction mésopendate (mmmm) de plus de 70 %.

2. Procédé selon la revendication 1, l'au moins une deuxième couche de filé-lié (3) ou l'au moins un deuxième filé-lié étant créé(e) à partir de filaments monocomposant (5.2).

3. Procédé selon la revendication 1 ou 2, au moins une troisième couche de filé-lié (4) ou au moins un troisième filé-lié étant créé(e) à partir de filaments multicomposants crêpés, notamment à partir de filaments bicomposants (5.3) crêpés et la deuxième couche de filé-lié (3) étant placée entre la première couche de filé-lié (2) et la troisième couche de filé-lié (4).

4. Procédé selon l'une quelconque des revendications 1 à 3, au moins deux, de préférence au moins trois deuxièmes couches de filé-lié (3) ou deuxièmes filés-liés étant créé(e)s à partir de filaments continus.

5. Procédé selon l'une quelconque des revendications 1 à 4, les filaments (5.1, 5.3) crêpés de la première couche de filé-lié (2) et / ou de la troisième couche de filé-lié (4) étant conçus sous la forme de filaments (5.1, 5.3) crêpés d'une configuration côte à côte ou d'une configuration âme-enveloppe, notamment d'une configuration âme-enveloppe excentrique.

6. Procédé selon l'une quelconque des revendications 1 à 5, les filaments (5.1, 5.3) crêpés de la première couche de filé-lié (2) et / ou de la troisième couche de filé-lié (4) comportant au moins un composant, de préférence deux composants ou au moins deux composants sur la base de polypropylène, notamment sur la base d'homopolypropylène.

7. Procédé selon l'une quelconque des revendications 1 à 6, les filaments (5.1, 5.3) crêpés de la première couche de filé-lié (2) et / ou de la troisième couche de filé-lié (4) comportant deux composants ou au moins deux composants sur la base de polypropylène, notamment sur la base d'homopolypropylène et les deux polypropylènes ou homopolypropylènes des deux composants se différenciant par leur taux de fluage (MFR) et de préférence le taux de fluage de l'un composant étant supérieur d'au moins 1,2 fois, de manière préférentielle d'au moins 1,4 fois au taux de fluage de l'autre composant.

8. Procédé selon l'une quelconque des revendications 1 à 7, les filaments continus (5), notamment les filaments monocomposant (5.2) de la deuxième couche de filé-lié (3) étant constitués ou sensiblement constitués d'au moins un élastomère, l'élastomère étant notamment un copolymère de propylène et d'éthylène et le copolymère faisant preuve de préférence d'un point de fusion compris entre 50 °C et 170 °C, de manière préférentielle compris entre 50 °C et 160 °C et de manière particulièrement préférentielle, compris entre 50 °C et 130 °C.

9. Procédé selon l'une quelconque des revendications 1 à 8, le polypropylène de l'élastomère des filaments continus ou des filaments monocomposant (5.2) de la deuxième couche de filé-lié (3) présentant une fraction mésopendate (mmmm) de plus de 80 % et de manière préférentielle, de plus de 90 %.

10. Procédé selon l'une quelconque des revendications 1 à 9, les filaments continus ou les filaments monocomposant (5.2) de la deuxième couche de filé-lié (3) étant créés avec un titre de 10 µm à 50 µm, de préférence de 20 µm à 50 µm, de manière préférentielle de 20 µm à 45 µm, de manière particulièrement préférentielle, de 25 µm à 45 µm, de manière tout particulièrement préférentielle, de 25 µm à 40 µm.

11. Procédé selon l'une quelconque des revendications 1 à 10, le stratifié (1) composé d'au moins la première couche de filé-lié (2) et la deuxième couche de filé-lié (3) ou le stratifié (1) composé d'au moins la première couche de filé-lié (2), la deuxième couche de filé-lié (3) et la troisième couche de filé-lié (4) étant calandré et à cet effet, le calandrage étant réalisé de préférence avec une part de la surface de pression ou une part de la surface de soudure de la calandre (8) de 8 % à 15 %.

12. Procédé selon l'une quelconque des revendications 1 à 11, le stratifié (1) composé d'au moins la première couche de filé-lié (2) et la deuxième couche de filé-lié (3) ou le stratifié composé d'au moins la première couche de filé-lié (2), la deuxième couche de filé-lié (3) et la troisième couche de filé-lié (4) étant calandré au moyen d'une calandre (8) avec une densité de figures de 10 à 50 figures/cm², de préférence de 10 à 40 figures/cm², de manière préférentielle de 10 à 35 figures/cm², de manière particulièrement préférentielle, de 12 à 33 figures/cm², de manière tout particulièrement préférentielle, de 15 à 30 figures/cm².

13. Procédé selon l'une quelconque des revendications 1 à 12, le stratifié (1) composé d'au moins la première couche de filé-lié (2) et la deuxième couche de filé-lié (3) ou le stratifié composé d'au moins la première couche de filé-lié (2), la deuxième couche de filé-lié (3) et la troisième couche de filé-lié (4) étant calandré au moyen d'une calandre (8), la température superficielle d'au moins un cylindre de calandrage (9) de la calandre (8) s'élevant à de 60 °C à 90 °C, de préférence à de 65 °C à 85 °C.

14. Procédé selon l'une quelconque des revendications 1 à 13, le stratifié (1) composé d'au moins la première couche de filé-lié (2) et la deuxième couche de filé-lié (3) ou le stratifié composé d'au moins la première couche de filé-lié (2), la deuxième couche de filé-lié (3) et la troisième couche de filé-lié (4) étant étiré ou étant étiré dans la direction de la machine (MD) et/ou à la transversale de la direction de la machine (CD).

15. Stratifié non-tissé (1), composé d'au moins deux couches de filé-lié (2, 3) - produit notamment d'après un procédé selon l'une quelconque des revendications 1 à 14 - une première couche de filé-lié (2) comportant des filaments continus sous la forme de filaments multicomposants crêpés ou de filaments bicomposants (5.1) crêpés, les filaments crêpés faisant preuve d'un taux de crêpage de plus de 2,5 boucles (loops) par cm de leur longueur, de manière préférentielle de plus de 3 boucles (loops) par cm de leur longueur,
une deuxième couche de filé-lié (3) avec des filaments continus étant prévue, lesdits filaments continus de la deuxième couche de filé-lié (3) comportant un élastomère sur la base de polypropylène et le polypropylène présentant une fraction mésopendate (mmmm) de plus de 70 %, de préférence de plus de 80 % et de manière préférentielle, de plus de 90 %.

16. Stratifié non-tissé (1) selon la revendication 15, le stratifié non-tissé (1) comprenant une troisième couche de filé-lié (4), ladite troisième couche de filé-lié (4) comportant des filaments multicomposants crêpés ou des filaments bicomposants (5.3) crêpés, lesdits filaments crêpés faisant preuve d'un taux de crêpage de plus de 2,5 boucles (loops) par cm de leur longueur, de manière préférentielle, de plus de 3 boucles (loops) par cm de leur longueur.

17. Stratifié non-tissé (1) selon l'une quelconque des revendications 15 ou 16, le titre des filaments continus (5) de la première couche de filé-lié (2) et / ou de la troisième couche de filé-lié (4) s'élevant à de 1,0 à 2,0.
